# EUROPÄISCHE PATENTANMELDUNG

(11) **EP 0 770 580 A1**
(43) Veröffentlichungstag der Anmeldung: **02.05.1997**
(21) Anmeldenummer: 96116837.4
(22) Anmeldetag: 19.10.1996
(51) Int. Cl.: C02F 3/12, C02F 3/22

(54) **Verfahren zum biologischen Reinigen von Abwasser**

(30) Priorität: 26.10.1995 DE 19539758; 31.08.1996 DE 19635443
(71) Anmelder: Technische Consult Tecon GmbH, 38678 Clausthal-Zellerfeld (DE)
(72) Erfinder: Vogelpohl, Alfons, Prof. Dr.-Ing., 38678 Clausthal-Zellerfeld (DE)
(74) Vertreter: Döring, Roger, Dipl.-Ing.

(57) **Zusammenfassung**

Es wird ein Verfahren zum biologischen Reinigen von Abwasser angegeben, bei welchem das Abwasser und Gas einem Mikroorganismen enthaltenden Reaktionsbehälter (1) zugeführt werden, in dem mindestens ein an beiden Enden offenes Leitrohr (2) mit vertikaler Achse und mit Abstand zum Boden des Reaktionsbehälters (1) angeordnet ist. Das Gemisch aus Abwasser und Gas wird in dem Reaktionsbehälter (1) in einem durch das Leitrohr (2) führenden Kreislauf bewegt. Das Abwasser wird dem Leitrohr (2) am in Gebrauchslage oberen Ende zugeführt, während das Gas davon getrennt, an mindestens zwei, in unterschiedlicher Höhe und in Strömungsrichtung des unter Druck eingebrachten Abwassers hinter dessen Eintrittsbereich in das Leitrohr (2) liegenden Stellen (S2,S3) in dasselbe eingeleitet wird.

## Beschreibung

Die Erfindung bezieht sich auf ein Verfahren zum biologischen Reinigen von Abwasser, bei welchem das Abwasser und Gas einem Mikroorganismen enthaltenden Reaktionsbehälter zugeführt werden, in dem mindestens ein an beiden Enden offenes Leitrohr mit vertikaler Achse und mit Abstand zum Boden des Reaktionsbehälters angeordnet ist, und bei welchem das Gemisch aus Abwasser und Gas in dem Reaktionsbehälter in einem durch das Leitrohr führenden Kreislauf bewegt wird (EP 0 130 499 B1).

Bei der biologischen Reinigung von Abwasser werden organische Schadstoffe von Mikroorganismen - im folgenden als "Biomasse" bezeichnet - unter Verwendung von Sauerstoff in unschädliche Stoffe umgewandelt. Das Abwasser wird durch Begasen eines Biomasse-Wasser-Gemisches in einem Reaktionsbehälter gereinigt, dem kontinuierlich Abwasser und Gas zugeführt und eine vergleichbare Menge an Biomasse-Wasser-Gemisch entnommen werden. Unter "Gas" sollen Luft, mit Sauerstoff angereicherte Luft oder auch reines Sauerstoffgas verstanden werden.

Im häuslichen Bereich, aber auch bei vielen industriellen Prozessen entstehen organisch beladene Abwässer. Für die Reinigung solcher Abwässer sind Verfahren zum Eliminieren der gelösten organischen Verbindungen auf aerobem Wege durch Mikroorganismen bekannt. Diese Verfahren werden meistens in flachen Belebungsbecken durchgeführt Die Nachteile derartiger Verfahren, wie Geruchsbelästigung der Umgebung aufgrund hoher Abluftmengen, hoher Lärmpegel, großer Platzbedarf sowie hohe Investitions- und Energiekosten, sind allgemein bekannt.

Es ist weiterhin bekannt, Abwasser in hohen zylindrischen Türmen ähnlich einer Blasensäule zu reinigen (DE-Z "Chemie-Ingenieur-Technik" 54 (1982), Nr. 11, Seiten 939 bis 952). Wegen der ungünstigen hydrodynamischen Verhältnisse und damit der relativ schlechten Stoffübergangsbedingungen von Blasensäulen ist deren Raumbelastung, das ist die auf das Volumen des Reaktionsbehälters und den Tag bezogene und in CSB gemessene Menge an Schmutzstoffen, vergleichsweise niedrig. Sie liegt bei etwa 1 kg CSB/m³d. Die Begasung erfolgt ausschließlich am Boden des jeweils eingesetzten Turmes, wodurch der spezifische Energiebedarf für dieses Verfahren relativ hoch ausfällt.

In der DE 40 12 300 A1 ist eine Vorrichtung zum biologischen Reinigen von Abwasser in einem geschlossenen Reaktor beschrieben. Ein Gemisch aus Abwasser, einem Sauerstoff enthaltenden Gas und Biomasse wird über eine Zweistoffdüse einem inneren Strömungsleitrohr des Reaktors zugeführt, und zwar in dessen in Gebrauchslage unterem Bereich. Ein Teilstrom des zu behandelnden Abwassers wird in den Ringraum zwischen dem Strömungsleitrohr und der Wandung des Reaktors eingedüst. Ein Teil des behandelten Gemisches wird ständig in ein separates Misch- und Entgasungsgefäß geleitet. Durch die Einführung des Gemisches aus Abwasser, Gas und Biomasse an einer im unteren Bereich des Strömungsleitrohr liegenden Stelle enthält dasselbe in seinem oberen Bereich praktisch kein Gas. Es kann daher in diesem Bereich auch kein Sauerstoff in das Abwasser bzw. in das Gemisch übertragen werden. Trotz des mit dieser Vorrichtung gegebenen Schlaufenbetriebs ist daher die Stoffübertragung relativ schlecht.

Mit dem eingangs beschrieben Verfahren nach der EP 0 130 499 B1 wird ein deutlich höherer Umsatz bei der Abwasserbehandlung erreicht. Es ergibt sich eine Raumbelastung von bis zu 70 kg CSB/m³d. Die bei diesem Verfahren eingesetzten Reaktionsbehälter werden als "Schlaufenreaktoren" bezeichnet. Hierbei handelt es sich um senkrecht angeordnete, zylindrische Behälter, in deren Innenraum zusätzlich ein an beiden Seiten offenes Leitrohr mit vertikaler Achse angebracht ist. Beim Betrieb dieses Schlaufenreaktors entsteht eine Schlaufenströmung um das Leitrohr mit einer Vermischung von Flüssigkeit und Gas. Vorteile einer solchen Schlaufenströmung sind eine verhältnismäßig homogene Strömung der beiden Phasen und die damit verbundene gute Übertragung des für die Abwasserreinigung benötigten Sauerstoffs aus dem Gas in die Flüssigkeit. Bei diesem bekannten Verfahren wird das Gas oben in das Leitrohr eingeführt, so daß es mindestens einmal eine vollständige Schlaufe durchläuft, ehe es aus dem Reaktionsbehälter austreten kann. Es ist jedoch ein hoher Energieeintrag durch die dem Leitrohr zugeführte Flüssigkeit erforderlich, damit das zugeführte und zu Blasen zerteilte Gas entgegen seiner Aufstiegsbewegung mit der Schlaufenströmung nach unten transportiert wird.

Der Erfindung liegt die Aufgabe zugrunde, das eingangs geschilderte Verfahren so weiterzubilden, daß bei verbessertem Stoffaustausch der Energieaufwand vermindert wird.

Diese Aufgabe wird gemäß der Erfindung dadurch gelöst, daß das Abwasser dem Leitrohr am in Gebrauchslage oberen Ende zugeführt wird, während das Gas davon getrennt an mindestens zwei, in unterschiedlicher Höhe und in Strömungsrichtung des unter Druck eingebrachten Abwassers hinter dessen Eintrittsbereich in das Leitrohr liegenden Stellen in dasselbe eingeleitet wird.

Bei diesem Verfahren wird das Gas dem Leitrohr an Stellen zugeführt, die in Strömungsrichtung des beispielsweise mittels einer Pumpe eingebrachten Abwassers hinter der Stelle liegen, an welcher das Abwasser zugeführt wird. Durch diese räumliche Trennung der Einspeisestellen von Abwasser und Gas und eine geeignete Verteilung des insgesamt eingebrachten Gases auf dessen Einspeisestellen wird das Gas bei der Abwärtsbewegung des Abwassers bzw. der im Leitrohr insgesamt vorhandenen Flüssigkeit auch ohne großen Energieeintrag mitgenommen. Das gilt besonders, wenn die überwiegende Menge des insgesamt einzubringenden Gases im unteren Bereich des Leitrohres eingespeist wird. Das Gas wird dann nahezu direkt von der unten aus dem Leitrohr austretenden Flüssigkeit mitgerissen. Durch die starke Verwirbelung der Flüssigkeit beim Übergang aus dem Leitrohr in den dasselbe umgebenden Mantelraum ist eine gute Dispergierung des Gases gewährleistet. Eine gesonderte Dispergiereinrichtung, wie z. B. ein Ringverteiler oder ein Membranverteiler, entfällt damit. Bei einer überwiegenden Gaszuführung am unteren Ende des Leitrohrs wird das Prinzip der Mammutpumpe genutzt, wodurch der Energiebedarf zur Aufrechterhaltung der Schlaufenströmung minimiert wird. Durch die Zuführung einer ausreichenden Gasmenge im oberen Bereich des Leitrohrs und durch eine entsprechende Einstellung der rezirkulierten Flüssigkeit mit Hilfe einer Pumpe kann außerdem sichergestellt werden, daß der überwiegende Teil des im Mantelraum aufsteigenden Gases wieder in das Leitrohr eingesaugt wird. Es werden damit ein hoher Gasumlauf und zugleich eine vollständige Begasung des gesamten Reaktionsraums erreicht.

Das Verfahren nach der Erfindung wird anhand der Zeichnungen in Ausführungsbeispielen erläutert.

Es zeigen:
Fig. 1 schematisch eine Anordnung zur Durchführung des Verfahrens.
Fig. 2 eine gegenüber Fig. 1 erweiterte Anlage.

In einem Reaktionsbehälter 1 ist ein Leitrohr 2 mit vertikaler Achse angeordnet. Das Leitrohr 2 ist an beiden Enden offen. Sein unteres Ende hat einen ausreichenden Abstand vom Boden 3 des Reaktionsbehälters 1, so daß die in demselben vorhandene Flüssigkeit in einem durch das Leitrohr 2 führenden Kreislauf bewegt werden kann. Die Flüssigkeit ist ein Biomasse-Wasser-Gemisch.

Das zu reinigende Abwasser wird dem Leitrohr 2 über eine Rohrleitung 4 zugeführt. Es tritt an der Stelle S1 in das Leitrohr 2 ein. Über mindestens eine Rohrleitung 5 wird außerdem Gas in das Leitrohr 2 eingeführt, das an den Stellen S2 und S3 austritt. Die Stellen S1 sowie S2 und S3 sind räumlich voneinander getrennt. Die Stellen S2 und S3 liegen dabei in der durch den Pfeil P gekennzeichneten Strömungsrichtung des Abwassers im Leitrohr 2 hinter der Stelle S1. Abweichend von der zeichnerischen Darstellung könnte das Gas auch über zwei getrennte Zuleitungen zu den Stellen S2 und S3 gebracht werden.

Das Verfahren nach der Erfindung arbeitet beispielsweise wie folgt:

Das zu reinigende, aus einer Leitung 6 kommende Abwasser (Rohabwasser) wird über die Rohrleitung 4 zusammen mit aus dem Reaktionsbehälter 1 entnommener Flüssigkeit dem Leitrohr 2 des Reaktionsbehälters 1 zugeführt. Bei hinreichender Geschwindigkeit dieser Flüssigkeit, die über eine Pumpe 7 eingestellt werden kann, stellt sich eine Schlaufenströmung um das Leitrohr 2 ein. Das gereinigte Abwasser verläßt den Reaktionsbehälter 1 gemeinsam mit Biomasse über eine Leitung 8. In einer nachgeschalteten, hier nicht gezeigten Vorrichtung werden Abwasser und Biomasse voneinander getrennt. Die Biomasse wird zum größten Teil über eine Leitung 9 in den Reaktionsbehälter 1 zurückgeführt. Der Rest der Biomasse wird als Überschußschlamm entnommen.

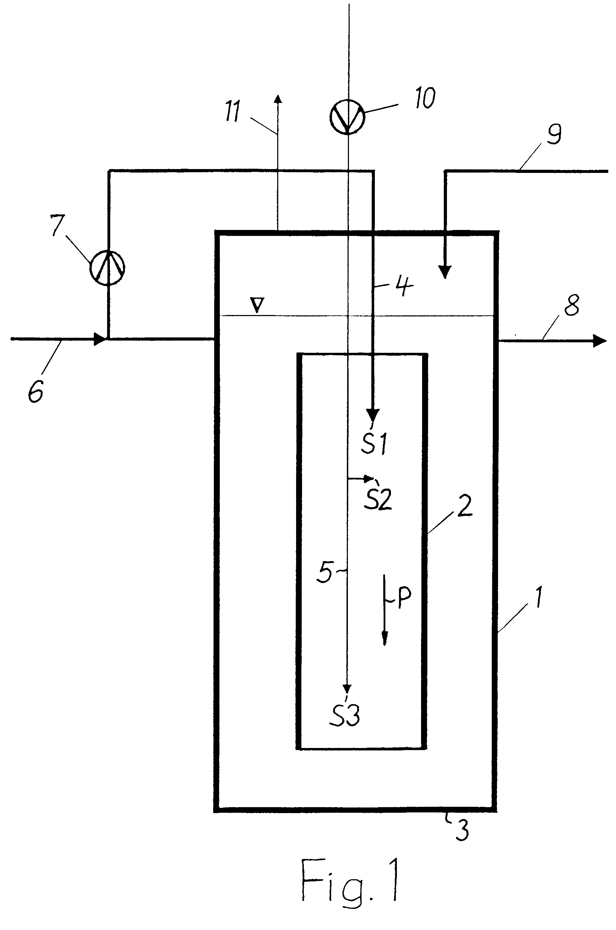

Der für die Abwasserreinigung erforderliche Sauerstoff wird als Gas, in der Regel Luft oder auch angereichertes oder reines Sauerstoffgas, über die Rohrleitung 5 in das Leitrohr 2 des Reaktionsbehälters 1 eingebracht. Die Rohrleitung 5 kann, wie in Fig. 1 dargestellt, von oben, aber auch seitlich in das Leitrohr 2 eingeführt werden. Die Mündung der Rohrleitung 5 befindet sich im unteren Bereich des Leitrohrs 2, zweckmäßigerweise im unteren Fünftel desselben. Je nach Höhe der Zweiphasenschicht im Reaktionsbehälter 1 wird das Gas mittels einer Pumpe 10 mehr oder weniger verdichtet. Die Dispergierung des Gases erfolgt an der Stelle S2 durch Scherwirkung des an der Stelle S1 austretenden Abwassers und an der Stelle S3 durch die 180 Grad-Umlenkung der Flüssigkeit am unteren Ende des Leitrohrs 2. Bei entsprechender Geschwindigkeit der aus der Rohrleitung 4 austretenden Flüssigkeit wird der überwiegende Teil des im das Leitrohr 2 umgebenden Mantelraum des Reaktionsbehälters 1 aufsteigenden Gases in das Leitrohr 2 zurückgesaugt, wodurch eine Rezirkulation des Gases erreicht wird. Eine dem insgesamt zugeführten Gas entsprechende Gasmenge verläßt den Reaktionsbehälter 1 über eine Leitung 11.

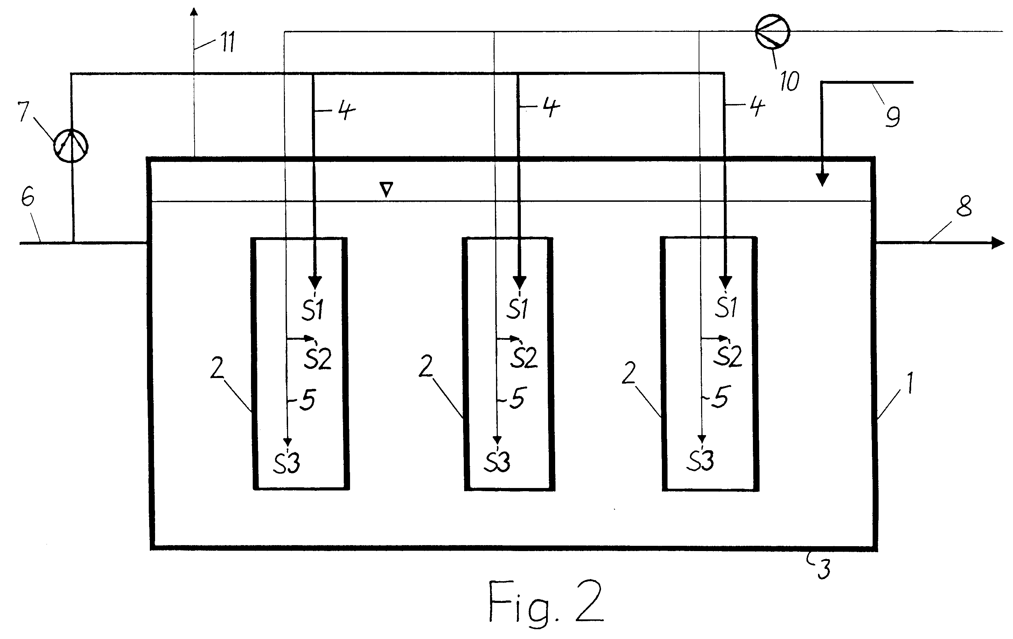

Da das Verhältnis von Höhe zu Durchmesser des Reaktionsbehälters 1 und des Leitrohrs 2 und die Geschwindigkeit der Flüssigkeit in demselben aus fluiddynamischen Gründen bestimmte Werte einhalten müssen und weil die Bauhöhe von Reaktionsbehälter 1 und Leitrohr 2 aus energetischen Gründen beschränkt ist, werden bei großen Abwassermengen zweckmäßig zwei oder mehr Leitrohre 2 mit entsprechenden Zuleitungen in einem Reaktionsbehälter 1 angeordnet. Das ist in Fig. 2 für drei Leitrohre 2 dargestellt. Der Einbau von mehreren Leitrohren 2 in einen Reaktionsbehälter 1 hat den zusätzlichen Vorteil, daß die Dispergierung des in den jeweiligen Leitrohren 2 an den Stellen S2 und S3 zugeführten Gases durch einen Pralleffekt der umgelenkten und aufeinander prallenden Flüssigkeitsströme noch verstärkt wird.

## Patentansprüche

1. Verfahren zum biologischen Reinigen von Abwasser, bei welchem das Abwasser und Gas einem Mikroorganismen enthaltenden Reaktionsbehälter zugeführt werden, in dem mindestens ein an beiden Enden offenes Leitrohr mit vertikaler Achse und mit Abstand zum Boden des Reaktionsbehälters angeordnet ist, und bei welchem das Gemisch aus Abwasser und Gas in dem Reaktionsbehälter in einem durch das Leitrohr führenden Kreislauf bewegt wird, dadurch gekennzeichnet, daß das Abwasser dem Leitrohr (2) am in Gebrauchslage oberen Ende zugeführt wird, während das Gas davon getrennt an mindestens zwei, in unterschiedlicher Höhe und in Strömungsrichtung des unter Druck eingebrachten Abwassers hinter dessen Eintrittsbereich in das Leitrohr (2) liegenden Stellen (S2,S3) in dasselbe eingeleitet wird.

2. Verfahren nach Anspruch 1, dadurch gekennzeichnet, daß das Gas dem Leitrohr (2) an einer im Bereich des Abwasserzutritts liegenden Stelle (S2) und an einer in seinem in Gebrauchslage unteren Bereich liegenden Stelle (S3) zugeführt wird.

3. Verfahren nach Anspruch 1 oder 2, dadurch gekennzeichnet, daß die überwiegende Menge des Gases dem Leitrohr (2) in dessen in Gebrauchslage unterem Bereich zugeführt wird.

4. Verfahren nach einem der Ansprüche 1 bis 3, dadurch gekennzeichnet, daß das Abwasser dem Leitrohr (2) mittels einer Pumpe (7) mit hoher Geschwindigkeit zugeführt wird.

5. Verfahren nach einem der Ansprüche 1 bis 4, dadurch gekennzeichnet, daß das Abwasser dem Leitrohr (2) zusammen mit aus dem oberen Bereich des Reaktionsbehälters (1) entnommener Flüssigkeit zugeführt wird.

6. Verfahren nach einem der Ansprüche 1 bis 5, dadurch gekennzeichnet, daß in einem Reaktionsbehälter (1) zwei oder mehr Leitrohre (2) angeordnet sind.
